## Europäisches Patentamt

## European Patent Office

## Office européen des brevets

(11) Veröffentlichungsnummer: **0 118 755**
**B1**

(12) **EUROPÄISCHE PATENTSCHRIFT**

(45) Veröffentlichungstag der Patentschrift:
**01.06.88**

(51) Int. Cl.⁴: **H 04 N 11/04, H 04 N 7/13**

(21) Anmeldenummer: **84101250.3**

(22) Anmeldetag: **07.02.84**

(54) **Verfahren zur digitalen Übertragung von Fernsehbildern.**

(30) Priorität: **11.02.83 DE 3304835**

(73) Patentinhaber: **Siemens Aktiengesellschaft Berlin und München, Wittelsbacherplatz 2, D-8000 München 2 (DE)**

(43) Veröffentlichungstag der Anmeldung:
**19.09.84 Patentblatt 84/38**

(72) Erfinder: **Schlichte, Max, Dr.-Ing., Maxhofstrasse 30a, D-8000 München 71 (DE)**

(45) Bekanntmachung des Hinweises auf die Patenterteilung:
**01.06.88 Patentblatt 88/22**

(84) Benannte Vertragsstaaten:
**AT BE CH DE FR GB IT LI NL SE**

(56) Entgegenhaltungen:
US - A - 4 155 097
US - A - 4 281 344

**PROCEEDINGS OF IEEE, Band 68, Nr. 3, März 1980, New York, USA; A.N. NETRAVALI et al. "Picture coding : A review", Seiten 366–406**

## Beschreibung

Verfahren zur digitalen Übertragung von Fernsehbildern, bei dem jeweils die Signalwerte eines Fernsehteilbildes in Spektralwerte tansformiert werden, deren Koeffizienten ausgesendet werden und aus denen empfangsseitig wieder die Signalwerte des Fernsehteilbildes ermittelt werden.

Für die Codierung von Bildsignalen stehen hauptsächlich zwei Prinzipien zur Auswahl, das in der Zeitdomäne arbeitende Prädiktionsverfahren und das in dem Spektralbereich operierende Transformationsverfahren.

Diese Verfahren sind in dem Aufsatz «Picture Coding A Review» Proceedings of the IEEE, Vol. 68, No. 3, March 1980 S. 366–406 beschrieben.

Beide Verfahren machen von der starken Korrelation benachbarter Bildpunkte Gebrauch, indem sie eine Codierung anstreben, bei der die zur Darstellung eines Bildelementes verwendete Information auf den tatsächlichen Informationsgehalt reduziert wird. Diese Redundanzreduktion wird durch eine Irrelevanzreduktion ergänzt.

Die Signale des Fernsehbildes werden bei der Transformation in verschiedene Spektralwerte umgesetzt, deren Koeffizienten übertragen und auf der Empfangsseite wieder in die entsprechenden Signalwerte (Luminanz und Chrominanz) umgesetzt werden. Fehler, die durch die Verfälschung der Spektralwerte entstehen, werden kaum wahrgenommen, da sich die Energie der Fehler auf das Teilbild erstreckt.

Da ein Teil der Spektralwerte nur einen vernachlässigbaren Anteil der Gesamtenergie enthält, kann dieser Teil der Spektralwerte bei vielen Verfahren zu Null gesetzt werden. Hierdurch wird eine Datenreduktion möglich. Der entstehende Fehler verteilt sich wieder auf die übrigen Spektralwerte und ist deshalb kaum wahrzunehmen.

Da es technologisch noch nicht möglich ist, ganze Fernsehbilder geschlossen zu transformieren, begnügt man sich mit Transformation und Übertragung von Teilbildern. Eine dekorrelierende Wirkung der Transformation ist bei der üblichen blockweisen Transformation auch nur innerhalb der Teilbilder vorhanden.

In dem Patent US-A 4 155 097 sind ein Verfahren und eine Schaltungsanordnung zur Redundanzreduktion bei der Codierung von Fernsehbildern beschrieben. Ein Fernsehbild wird in Teilbilder zerlegt, die nacheinander übertragen werden. Zunächst werden jeweils als Stützwerte dienende Bildelemente eines Teilbildes, die stets alle Eckelemente enthalten, dekorreliert und übertragen. Aus den Stützwerten werden Schätzwerte für die dazwischenliegenden Bildelemente errechnet und die Differenzen zwischen Schätzwerten und den entsprechenden Bildelementen werden errechnet und quantisiert übertragen.

In dem Patent US-A 4 281 344 ist ein hybrides Interfrem Transformationscodiersystem beschrieben. Das Fernsehbild wird in Teilbilder zerlegt, deren Bildelemente einer Transformationscodierung unterworfen werden. Der Codierer enthält einen Speicher und eine Rückkopplungsschleife, durch die festgestellt wird, welche Bildelemente eines Teilbildes bezogen auf das vorhergehende Fernsehbild ihre Werte über einen Schwellwert hinaus geändert haben oder gleichgeblieben sind. Die Position der unverändert gebliebenen Bildelemente wird übertragen, während die Werte der veränderten Bildelemente der Transformationscodierung unterzogen werden.

Aufgabe der Erfindung ist es, ein Verfahren zur Übertragung von digitalen Fernsehbildern anzugeben, das zu einer verbesserten Bildqualität führt.

Ausgehend vom eingangs beschriebenen Stand der Technik wird diese Aufgabe dadurch gelöst, dass zunächst in gleichmässigen Abständen von $n_D$ Signalwerten Pfeilerteilbilder übertragen werden, dass anschliessend jeweils zwischen benachbarten Pfeilerteilbildern liegende $n_2$ komplementäre Signalwerte und an diese angrenzende $n_1$ überlappende Signalwerte, die als Teil der an die komplementären Signalwerte angrenzenden Pfeilerteilbilder bereits übertragen wurden, zu einem Brückenteilbild zusammengefasst werden, und dass die $n_B = n_1 + n_2$ Signalwerte eines Brückenteilbildes gemeinsam transformiert werden.

Grundgedanke der Erfindung ist es, durch Überlappung der Brückenteilbilder mit den Pfeilerteilbildern eine blockübergreifende Korrelation mitzuerfassen. Die bereits übertragenen Signalwerte der Pfeilerteilbilder werden bei der Transformation der Brückenteilbilder nochmals miterfasst. Diese überlappenden Signalwerte werden auf der Empfangsseite natürlich nicht ausgegeben. Durch die blockübergreifende Transformation wird eine bessere Bildqualität erzielt. Die Pfeilerteilbilder dienen als Interpolationsstützpunkte für die Brückenteilbilder.

Es ist vorteilhaft, dass die Pfeilerteilbilder mittels einer weiteren Transformation in Spektralwerte umgesetzt und übertragen werden.

Prinzipiell ist es möglich, die Pfeilerteilbilder mit einem beliebigen Verfahren zu übertragen. Es wird jedoch zweckmässigerweise ein Transformationsverfahren gewählt, da hierbei dieselben Schaltungen verwendet werden können. Bei einem Transformationsverfahren ist ausserdem die relativ grosse Unempfindlichkeit gegenüber Störungen gegeben. Selbstverständlich können auch Fehlerkorrekturmassnahmen getroffen werden.

Es ist vorteilhaft, dass von $n_B = n_1 + n_2$ Spektralwerten eines transformierten Brückenteilbildes nur $n_2$ Spektralwerte ausgesendet werden und dass empfangsseitig die Ermittlung der neu übertragenen komplementären Signalwerte durch Rücktransformation der ausgesendeten Spektralwerte unter Verwendung der bereits vorliegenden überlappenden Signalwerte der angrenzenden Pfeilerteilbilder erfolgt.

Durch die überlappende Transformation wird zunächst die Anzahl der zu übertragenden Spektralwerte vergrössert. Eine Reduktion dieser Spektralwerte erfolgt dadurch, dass bei der Übertragung eines Brückenteilbildes nur soviel Spektralwerte erforderlich sind, wie neu zu übertragende komplementäre Signalwerte in einem Brückenteilbild enthalten sind. Die komplementären Signalwerte ergänzen die bereits mit den Pfeilerteilbildern übertragenen Signalwerte zu einem kompletten Fernsehbild.

Es ist vorteilhaft, dass jeweils das nächste Pfeilerteilbild und anschliessend das vorhergehende zwischengespeicherte Brückenteilbild übertragen werden.

Bei diesem Verfahren wird auf der Empfängerseite nur ein kleiner Zwischenspeicher benötigt. Bei der Übertragung von eindimensionalen Teilbildern wird zunächst das erste Pfeilerteilbild übertragen, dann das zweite Pfeilerteilbild und anschliessend das dazwischenliegende Brückenteilbild. Dann erfolgt jeweils die Übertragung des folgenden Pfeilerteilbildes und des davorliegenden Brückenteilbildes.

Bei der Übertragung von zweidimensionalen Teilbildern müssen zunächst die ersten vier Pfeilerteilbilder übertragen werden, bevor das erste Brückenteilbild ausgesendet wird. Nach der Übertragung der ersten Reihe von Brückenteilbildern werden vor der Übertragung des ersten Brückenteilbildes der zweiten Reihe die nächsten beiden Pfeilerteilbilder übertragen. Anschliessend wird wieder jeweils ein Pfeilerteilbild übertragen.

Bei mehr als zweidimensionalen Teilbildern werden die Pfeilerteilbilder in einer entsprechenden Folge übertragen.

Es ist zweckmässig, dass diejenigen Spektralwerte ausgesendet werden, deren Koeffizienten kleine Amplituden aufweisen.

Zur Übertragung von kleinen Werten wird eine geringe Stellenanzahl des entsprechenden Codewortes benötigt. Entsprechend wird die Datenrate verkleinert.

Weitere vorteilhafte Ausbildungen der Erfindung sind in den übrigen Unteransprüchen angegeben.

Das erfindungsgemässe Verfahren wird anhand der Figuren 1 bis 9 näher erläutert.

Es zeigen:

Fig. 1 einen Ausschnitt aus einem Fernsehbild,
Fig. 2 die Prinzipdarstellung des Sendeteils,
Fig. 3 die Prinzipdarstellung des Empfangsteils,
Fig. 4 eine Matrix zur herkömmlichen Transformation von Teilbildern,
Fig. 5 eine Matrixdarstellung zur erfindungsgemässen Transformation des Fernsehbildes,
Fig. 6 zweidimensionale Fernsehteilbilder,
Fig. 7 ein erweitertes Prinzipschaltbild des Sendeteils,
Fig. 8 ein Prinzipschaltbild des dazugehörigen Empfangsteils und
Fig. 9 ein Prinzipschaltbild zur Ermittlung der komplementären Signalwerte.

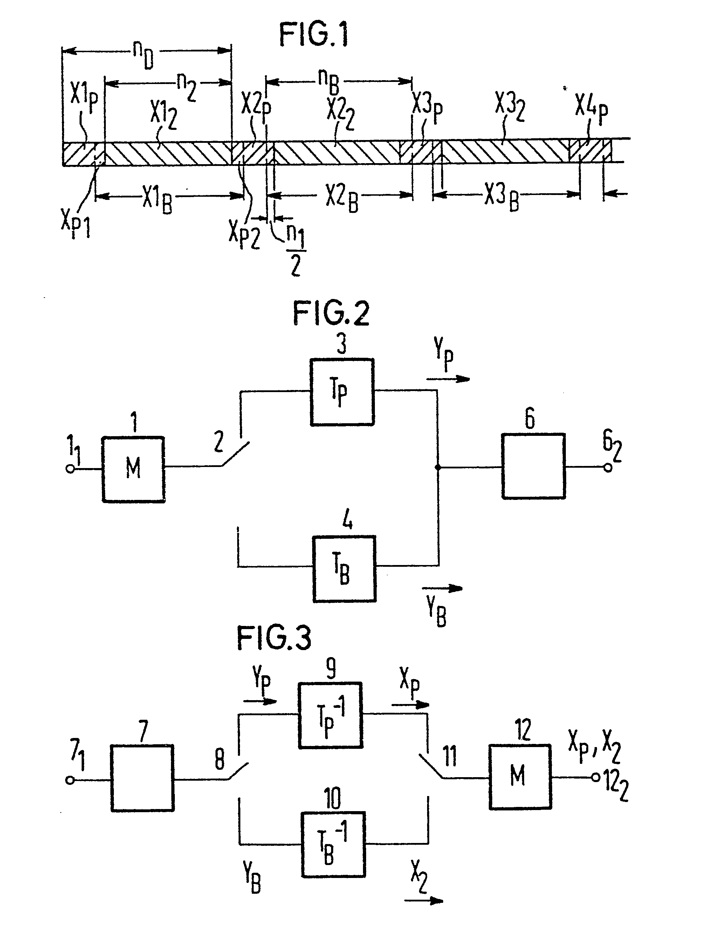

In Fig. 1 ist ein Ausschnitt eines Fernsehbildes dargestellt, das in Teilbilder zerlegt ist. Es sind selbstverständlich verschiedene Varianten bei der Übertragung von Fernsehbildern möglich. So kann beispielsweise ein Farbfernsehsignal in mehrere Komponenten, im allgemeinen das Luminanzsignal und zwei Farbdifferenzsignale, zerlegt werden. Jedes dieser Signale kann hierbei für sich weiterbehandelt werden. Ebenso kann ein Farbfernsehbild in drei Farbkomponenten zerlegt werden oder auch geschlossen, d.h. nicht in verschiedene Komponenten aufgeteilt, übertragen werden.

Das Fernsehbild, genauer, das Fernsehsignal, wird abgetastet und digitalisiert. Die Abtastrate kann hierbei so gewählt werden, dass jedem Bildpunkt nach der geltenden Fernsehnorm ein Abtastwert entspricht. In Fig. 1 ist als Ausschnitt eines Fernsehbildes der Teil einer Fernsehzeile dargestellt. Dies ist in Pfeilerteilbilder $X1_P$ bis $X4_P$ aufgeteilt, die stets dieselbe Anzahl von Signalwerten umfassen und dieselben Abstände $n_D$ zueinander haben. Zwischen den Pfeilerteilbildern $X1_P$ bis $X4_P$ ergänzen die komplementären Signalwerte $X1_2$ bis $X3_2$ die Pfeilerteilbilder zu einer kompletten Fernsehzeile, bzw. in Fig. 1 zu einem Teil der Fernsehzeile.

Bei der Übertragung eines Fernsehbildes werden zunächst die Pfeilerteilbilder übertragen, beispielsweise zunächst die Pfeilerteilbilder $X1_P$ und $X2_P$. Dann wird das dazwischenliegende Brückenteilbild $X1_B$ übertragen. Dieses umfasst $n_2$ komplementäre Signalwerte $X1_2$ und insgesamt $n_1$ überlappende Signalwerte $X_{P1}$ und $X_{P2}$, die einen Teil der Signalwerte des ersten Pfeilerteilbildes $X1_P$ bzw. $X2_P$ umfassen.

In Fig. 1 gibt die erste Ziffer nach dem Buchstaben X die zeitliche Reihenfolge der Teilbilder bzw. der Signalwerte an. In der weiteren Beschreibung wird – wenn möglich – auf die Angabe der zeitlichen Reihenfolge aus Gründen der Übersichtlichkeit verzichtet.

In Fig. 2 ist das Prinzipschaltbild des Sendeteils dargestellt. Es enthält einen Zwischenspeicher 1, dessen Ausgang auf einen ersten Umschalter 2 führt, über den wahlweise eine erste Transformationseinrichtung 3 oder eine zweite Transformationseinrichtung 4 angeschaltet wird. Die Ausgänge beider Transformationseinrichtungen sind zusammengeführt und auf einen Codierer 6 geschaltet.

Das digitalisierte Fernsehbild wird dem Zwischenspeicher 1 über seinen Eingang $1_1$ zugeführt. Aus dem Zwischenspeicher werden zunächst die Pfeilerteilbilder $X_P$ abgerufen und in der ersten Tansformationseinrichtung 3 transformiert. Die Spektralwerte $Y_P$ eines Pfeilerteilbildes werden dem Codierer 6 zugeführt und in einer für die Übertragung geeigneten Form am Ausgang $6_2$ des Codierers 6 abgegeben. Anschliessend werden die Brückenteilbilder $X_B$ aus dem Zwischenspeicher abgerufen und in der zweiten Transformationseinrichtung 4 in die Spektralwerte $Y_B$ umgesetzt. Diese Spektralwerte – entsprechend $n_B$ Signalwerten $X_B$ ergibt die Transformation ebenfalls $n_B$ Spektralwerte – werden dann über den Codierer 6 ebenfalls ausgesendet. Es ist technisch ohne weiteres möglich, die Transformationseinrichtungen 3 und 4 zusammenzufassen. Beide Transformationseinrichtungen führen ähnliche Rechenoperationen durch und können daher problemlos für unterschiedliche Transformationen umgeschaltet werden. Die noch genauer zu erläuternde Transformation kann mathematisch mit Hilfe der Vektor-Schreibweise und der Matrizendarstellung beschrieben werden. Jedes Teilbild wird durch einen Vektor z.B. X beschrieben, dessen einzelne Elemente beispielsweise die Amplituden des Luminanzsignals angeben. Bei mehrdimensionalen Transformationen tritt anstelle des Vektors eine Matrix. Für die sendeseitige Transformation, die Umsetzung der Signalwerte X in Spektralwerte Y gilt:

$$(1) \qquad Y = T \cdot X$$

wobei der Vektor X die Signalwerte $x_1$ bis $x_n$ umfasst und der Vektor Y die Spektralwerte $y_1$ bis $y_n$.

T stellt eine quadratische Transformationsmatrix dar, deren Zeilenzahl mit der Anzahl der Signalwerte X bzw. der Spektralwerte Y übereinstimmt. Der Empfangsteil hat die Aufgabe, die Spektralwerte wieder in die ursprünglichen Signalwerte X rückzutransformieren. In der Matrixschreibweise gilt:

$$(2) \qquad X = T^{-1} \cdot Y,$$

wobei $T^{-1}$ die zu T inverse Matrix darstellt.

Der Empfangsteil (Fig. 3) enthält einen Decodierer 7, dessen Ausgang auf eine zweite Umschalteinrichtung 8 führt, die wahlweise den Ausgang des Decodierers 7 mit einer ersten Rücktransformationseinrichtung 9 oder einer zweiten Rücktransformationseinrichtung 10 verbindet. Die Ausgänge der Rücktransformationseinrichtungen führen auf einen dritten Umschalter 11, der mit einem zweiten Zwischenspeicher 12 verbunden ist. In diesen werden die durch Rücktransformation gewonnenen Signalwerte $X_P$ und $X_2$ eingegeben und beispielsweise als geordneter kontinuierlicher Bitstrom am Ausgang $12_2$ abgegeben.

Die Rücktransformationen können selbstverständlich ebenfalls in einer gemeinsamen Rechenschaltung erfolgen, die im Zeitmultiplexbetrieb arbeitet. Die Umschalter 8, 11 werden dann nicht benötigt.

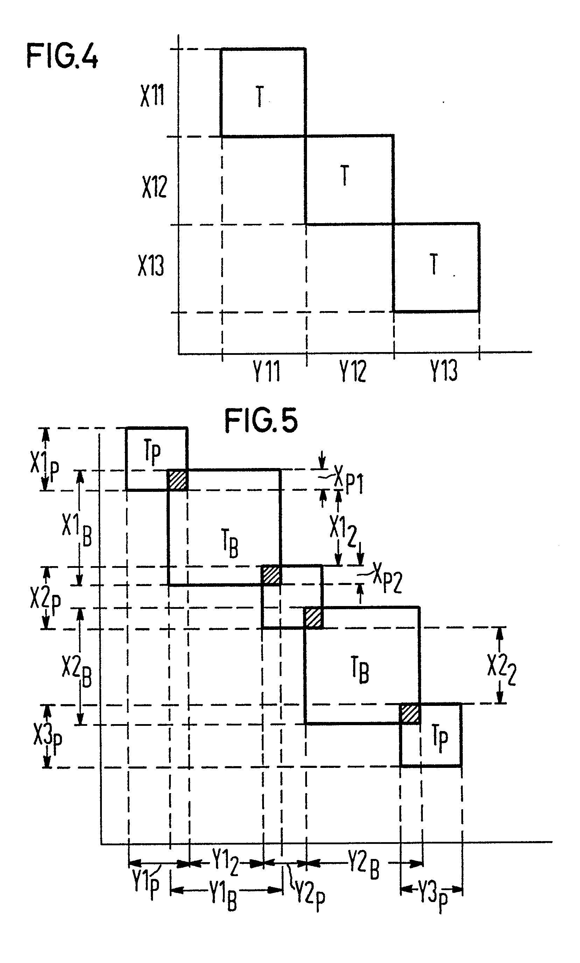

In Fig. 4 ist die bisher übliche Transformation von Fernsehteilbildern als Ausschnitt einer Matrix dargestellt. Die aufeinanderfolgenden Fernsehteilbilder X11, X12 und X13 sollen in die Spektralwerte Y11, Y12 und Y13 transformiert werden. Theoretisch ist natürlich auch die Transformation eines ganzen Fernsehbildes denkbar. Dies würde aber äusserst umfangreiche Rechenoperationen erfordern, da die Transformationsmatrix dann dem gesamten Fernsehbild anzupassen ist. In Fig. 4 ist das Fernsehbild dagegen in kleine Fernsehteilbilder X11, X12, X13... zerlegt, die durch eine entsprechend verkleinerte Transformationsmatrix T in die Spektralwerte Y11, Y12, Y13... umgegesetzt werden. Der Transformationsvorgang wiederholt sich für jedes Teilbild, wobei relativ wenig Rechenoperationen durchzuführen sind.

Fig. 5 zeigt das erfindungsgemässe Verfahren als Matrixdarstellung. Die Pfeilerteilbilder $X1_P$ bis $X3_P$ werden mit Hilfe der ersten Transformationsmatrix $T_P$ in die Spektralwerte $Y1_P$ bis $Y3_P$ umgesetzt. Die dazwischenliegenden komplementären Signalwerte $X1_2$, $X2_2$ werden durch überlappende Signalwerte $X_{P1}$, $X_{P2}$, die als Signalwerte auch den Pfeilerteilbildern $X1_P$, $X2_P$, $X3_P$ zugehörig sind, zu Brückenteilbildern $X1_B$, $X2_B$, ergänzt. Jedes Brückenteilbild $X_B$ wird geschlossen mit Hilfe der Transformationsmatrix $T_B$ in die Spektralwerte $Y_B$ transformiert. Die erste Ziffer nach jedem Vektor, die keinen Index darstellt, gibt die zeitliche Reihenfolge an. Auf die Bezeichnung der zeitlichen Reihenfolge wird, wie bereits erwähnt, – wenn möglich – zukünftig verzichtet.

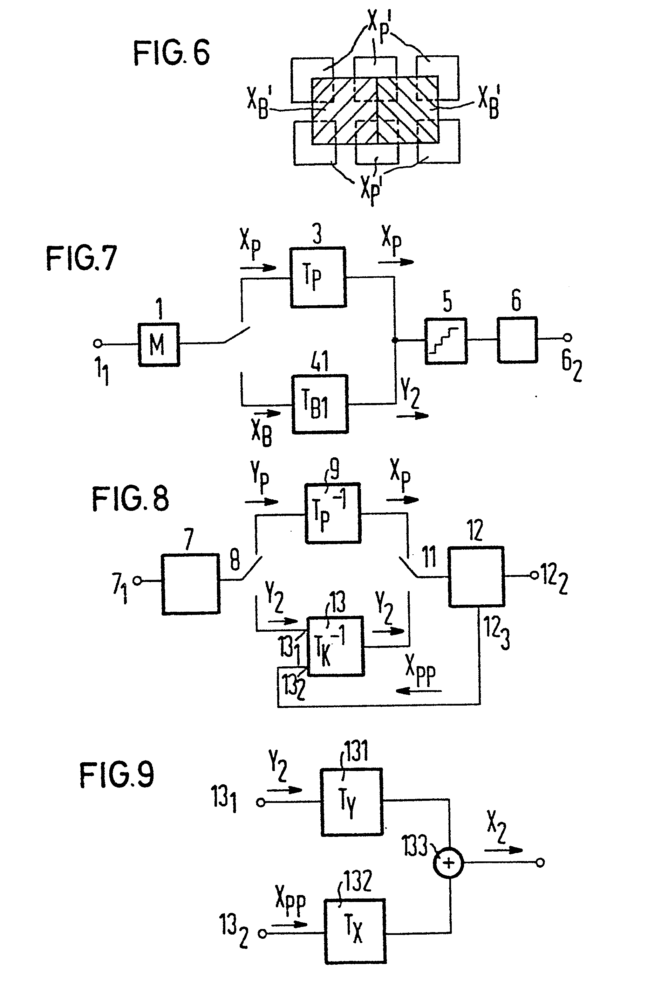

In Fig. 6 ist die Zerlegung eines Fernsehbildes in zweidimensionale Teilbilder dargestellt. Die Pfeilerteilbilder $X_P'$ stellen kleine Quadrate dar, die gleiche Abstände zueinander haben. Die Brückenteilbilder $X_B'$ sind als grössere Quadrate schraffiert dargestellt. Ihre Ecken überlappen die Ecken von jeweils vier Pfeilerteilbildern. Bei der Verwendung von zweidimensionalen Teilbildern muss natürlich auch eine zweidimensionale Transformation erfolgen. Entsprechendes gilt für alle mehrdimensionalen Teilbilder. Dabei wird für die Transformation von Fernsehbildern auch das vorhergehende und das nächste Fernsehbild herangezogen.

In Fig. 7 ist ein erweiterter Sendeteil dargestellt, der einen dem Codierer 6 vorgeschalteten Quantisierer 5 enthält. Die zweite Transformationseinrichtung 4 ist durch eine modifizierte Transformationseinrichtung 41 ersetzt. Die modifizierte zweite Transformationseinrichtung 41 gibt an ihrem Ausgang nicht $n_B$ Signale ab, sondern nur $n_2$ Signale. $n_2$ entspricht der Anzahl der komplementären Signalwerte $X_2$. Die ausgegebenen Spektralwerte $Y_2$ sind in Figur 5 als Teil $Y1_2$ z.B. der Spektralwerte $Y1_B$ dargestellt. Aus den $n_B$ Spektralwerten $Y_B$ können $n_2$ beliebige Spektralwerte $Y_2$ ausgewählt werden. Im allgemeinen wird man Spektralwerte mit geringeren Amplituden bevorzugen, da zu ihrer Übertragung eine geringere Anzahl von Binärstellen notwendig ist. Die der Umsetzung in $n_2$ Spektralwerte $Y_2$ entsprechende Transformationsmatrix $T_{B1}$ ist daher durch Streichung der entsprechenden Zeilen einfach aus der ursprünglichen Übertragungsmatrix $T_B$ abzuleiten. Dies entspricht dem Fortlassen von Multiplikationen mit den entsprechenden Matrixzeilen in einer Rechenschaltung. Aus der Transformations-Gleichung $Y = T \cdot X$ gilt für den Sendeteil nach Fig. 7:

$$(3) \qquad Y_P = T_P \cdot X_P \text{ und}$$

$$(4) \qquad Y_B = T_B \cdot X_B \text{ mit}$$

(5) $\qquad X_B = \begin{bmatrix} X_{P1} \\ X_2 \\ X_{P2} \end{bmatrix}$ und somit

(6) $\qquad Y_B = T_B \begin{bmatrix} X_{P1} \\ X_2 \\ X_{P2} \end{bmatrix}$

für die Rücktransformation gilt (2) $X = T^{-1} \cdot Y$ entsprechend (7) $X_P = T_P^{-1} \cdot Y_P$ und

(8) $\qquad X_B = T_B^{-1} \cdot Y_B$

In einem zum vorstehend beschriebenen Sendeteil zugehörigen Empfangsteil müssen die komplementären Signalwerte $X_2$ ermittelt werden. Dem Empfänger stehen hierzu die übertragenen Spektralwerte $Y_2$ und die bereits ermittelten überlappenden Signalwerte $X_{P1}$ und $X_{P2}$ zur Verfügung. Im Empfänger muss hiermit die Gleichung

(9) $\qquad X_2 = T_X \begin{bmatrix} X_{P1} \\ X_{P2} \end{bmatrix} + T_Y Y_2$

gelöst werden.

Mit $X_{PP} = \begin{bmatrix} X_{P1} \\ X_{P2} \end{bmatrix}$ wird die Gleichung $Y_B = T_B \begin{bmatrix} X_{P1} \\ X_2 \\ X_{P2} \end{bmatrix}$

umgeformt in $Y'_B = T_{B1} \begin{bmatrix} X_{PP} \\ X_2 \end{bmatrix}$

Bei dieser Umformung wurden die überlappenden Signalwerte $X_{P1}$ und $X_{P2}$ zu einem Vektor $X_{PP}$ zusammengefasst. Die Transformationsmatrix $T_B$ wurde entsprechend in eine Transformationsmatrix $T_{B1}$ umgeformt. Die Spektralwerte $Y'_B$ sind gegenüber den ursprünglichen Spektralwerten $Y_B$ in einer anderen Reihenfolge sortiert. Mit

(12) $\qquad Y'_B = \begin{bmatrix} Y_1 \\ Y_2 \end{bmatrix}$ ergibt sich:

(13) $\qquad X_B = \begin{bmatrix} X_{PP} \\ X_2 \end{bmatrix} = T_{B1}^{-1} \begin{bmatrix} Y_1 \\ Y_2 \end{bmatrix}$

Die Rücktransformationsmatrix $T_{B1}{-}1$ kann den Vektoren $Y_1$, $Y_2$ entsprechend in vier Teilmatrizen aufgeteilt werden:

(14) $\qquad T_{B1}^{-1} = \begin{bmatrix} T_1 & T_2 \\ T_3 & T_4 \end{bmatrix}$

Die Anzahl der Spalten von $T_1$ entspricht der Anzahl der Elemente des Vektors $Y'_B$, die Anzahl der Spalten von $T_2$ entspricht der Anzahl der Elemente des Vektors $Y_2$, usw. Hieraus ergeben sich für die überlappenden Signalwerte $X_{PP}$ und die komplementären Signalwerte $X_2$:

(15) $\qquad X_{PP} = T_1 Y_1 + T_2 Y_2$

(16) $\qquad X_2 = T_3 Y_1 + T_4 Y_2$

Hieraus können die komplementären Spektralwerte $X_2$ ermittelt werden.

(17) $\qquad X_2 = T_3 T_1^{-1} X_{PP} + (T_4 - T_3 T_1^{-1} T_2) Y_2$

und damit ergibt sich für eine Rücktransformationsschaltung

(18) $\qquad T_X = T_3 T_1^{-1}; \; T_Y = T_4 - T_3 T_1^{-1} T_2$

Die vorstehend beschriebenen Umwandlungen müssen praktisch nicht durchgeführt werden. Durch die Ordnungsmassnahmen wurden sowohl bei den Signalwerten als auch bei den Spektralwerten jeweils nur die entsprechenden Zeilen vertauscht. Entsprechend musste eine Umordnung der Transformationsmatrix stattfinden. Da die Rücktransformation ebenfalls nur die Multiplikation einer Matrix mit einem Spaltenvektor darstellt, muss jeweils nur für die richtige Zuordnung der Elemente der Matrix zu den Elementen des Spaltenvektors gesorgt werden.

Ein zum in Fig. 7 dargestellten Sendeteil passender Empfangsteil ist in Fig. 8 dargestellt. Gegenüber dem Empfangsteil nach Fig. 3 unterscheidet sich dieser Empfangsteil durch eine modifizierte Rücktransformationseinrichtung 13 und einen zusätzlichen Ausgang $12_3$ des zweiten Zwischenspeichers 12. Die vom Decodierer 7 abgegebenen Spektralwerte $Y_P$ der Pfeilerteilbilder werden in der ersten Rücktransformationsanordnung 9 wieder in die Signalwerte $X_P$ der Pfeilerteilbilder zurücktransformiert. Diese Signalwerte werden in dem zweiten Zwischenspeicher 12 zwischengespeichert. Werden nun die Spektralwerte $Y_2$ der komplementären Signalwerte $X_2$ empfangen, so werden diese gemeinsam mit den gespeicherten überlappenden Signalwerten $X_{P1}$, $X_{P2}$ einem zweiten Eingang $13_2$ der modifizierten Rücktransformationsanordnung 13 zugeführt. Die überlappenden Signalwerte sind in Fig. 8 bereits zusammengefasst als Vektor $X_{PP}$ bezeichnet. Nach der Rücktransformation werden die komplementären Signalwerte $X_2$ in den zweiten Zwischenspeicher 12 eingeschrieben. Am Ausgang $12_2$ des zweiten Zwischenspeichers werden die Signalwerte des Fernsehbildes wieder in der richtigen Reihenfolge abgegeben.

In Fig. 9 ist eine prinzipielle Rücktransformationsanordnung angegeben. Sie enthält zwei Recheneinheiten 131 und 132 zur Matrizenmultiplikation, deren Ausgänge über einen Addierer 133 zusammengefasst sind. Über einen ersten Eingang $13_1$ werden der ersten Rechenschaltung 131 die empfangenen Spektralwerte $Y_2$ zugeführt. Der zweiten Rechenschaltung 132 werden über den Eingang $13_2$ die gespeicherten überlappenden Signalwerte $X_{PP}$ zugeführt. Die Ergebnisse beider Matrizenmultiplikationen werden über den Addierer 133 zu den komplementären Signalwerten $X_2$ zusammengefasst.

Die Rücktransformationseinrichtungen 9 und 13 können natürlich wieder in einer einzigen Rechenschaltung durch Zeitmultiplexbetrieb realisiert werden.

Der in Fig. 7 dargestellte Quantisierer 5 dient zu einer weiteren Reduzierung der zu übertragenden Bitrate. Bei seiner Bemessung ist das physiologische Verhalten des menschlichen Auges massgebend.

Zur Transformation eignet sich besonders die diskrete Fourier-Transformation (DFT).

Für die Pfeilerteilbilder werden bei zweidimensionaler Transformation ca. 16–64 Signalwerte verwendet, für die komplementären Signalwerte jeweils ca. 20–80.

Für die Multiplikation von Vektoren mit Matrizen sind zahlreiche Rechenschaltungen bekannt. Beispielsweise wird jeweils ein Glied einer Zeile der Matrix aus einem Festwertspeicher abgerufen, mit einem dazugehörigen Wert eines Spaltenvektors multipliziert und in einem Akkumulator addiert. Nach Bearbeitung einer Zeile wird das Ergebnis der Akkumulation als ein Glied des zu berechnenden Spaltenvektors abgespeichert und der Multiplikationsvorgang wiederholt sich mit der nächsten Zeile der Matrix.

**Patentansprüche**

1. Verfahren zur digitalen Übertragung von Fernsehbildern, bei dem jeweils die Signalwerte eines Fernsehteilbildes ($X11$) in Spektralwerte ($Y11$) transformiert werden, deren Koeffizienten ausgesendet werden und aus denen empfangsseitig wieder die Signalwerte des Fernsehteilbildes ($X11$) ermittelt werden, dadurch gekennzeichnet, dass zunächst in gleichmässigen Abständen von $n_D$ Signalwerten Pfeilerteilbilder ($X1_P$, $X2_P$) übertragen werden, dass anschliessend jeweils zwischen benachbarten Pfeilerteilbildern ($X1_P$, $X2_P$) liegende $n_2$ komplementäre Signalwerte ($X1_2$) und an diese angrenzende $n_1$ überlappende Signalwerte ($X_{P1}$, $X_{P2}$), die als Teil der an die komplementären Signalwerte ($X1_2$) angrenzenden Pfeilerteilbilder ($X1_P$, $X2_P$) bereits übertragen wurden, zu einem Brückenteilbild ($X1_B = X_{P1}$, $X1_2$, $X_{P2}$) zusammengefasst werden, und dass die $n_B = n_1 + n_2$ Signalwerte ($X_{P1}$, $X_{P2}$, $X1_2$) eines Brückenteilbildes ($X1_B$) gemeinsam transformiert werden (Fig. 1, Fig. 5).

2. Verfahren zur digitalen Übertragung von Fernsehbildern nach Anspruch 1, dadurch gekennzeichnet, dass die Pfeilerteilbilder ($X_P$) mittels einer weiteren Transformation ($T_P$) in Spektralwerte ($Y_P$) umgesetzt und übertragen werden.

3. Verfahren zur digitalen Übertragung von Fernsehbildern, nach Anspruch 1 oder 2, dadurch gekennzeichnet, dass von $n_B = n_1 + n_2$ Spektralwerten ($Y_B$) eines transformierten Brückenteilbildes ($X_B$) nur $n_2$ Spektralwerte ($Y_2$) ausgesendet werden und dass empfangsseitig die Ermittlung der neu übertragenen komplementären Signalwerte ($X_2$) durch Rücktransformation der ausgesendeten Spektralwerte ($Y_2$) unter Verwendung der bereits vorliegenden überlappenden Signalwerte ($X_{P1}$, $X_{P2}$) der angrenzenden Pfeilerteilbilder ($X1_P$, $X2_P$) erfolgt.

4. Verfahren zur digitalen Übertragung von Fernsehbildern nach Anspruch 1 oder 2, dadurch gekennzeichnet, dass zunächst alle Pfeilerteilbilder ($X_P$) eines Fernsehhalbbildes oder eines Vollbildes übertragen werden und dass anschliessend die zwischengespeicherten Brückenteilbilder ($X_B$) übertragen werden.

5. Verfahren zur digitalen Übertragung von Fernsehbildern nach einem der Ansprüche 1 bis 3, dadurch gekennzeichnet, dass jeweils das nächste Pfeilerteilbild ($X2_2$) und anschliessend das vorhergehende zwischengespeicherte Brückenteilbild ($X1_B$) übertragen wird.

6. Verfahren zur digitalen Übertragung von Fernsehbildern nach einem der vorhergehenden Ansprüche, dadurch gekennzeichnet, dass eine Quantisierung der auszusendenden Spektralwerte ($Y_2$) erfolgt.

7. Verfahren zur digitalen Übertragung von Fernsehbildern nach einem der vorhergehenden Ansprüche, dadurch gekennzeichnet, dass diejenigen Spektralwerte ($Y_2$) ausgesendet werden, deren Koeffizienten kleine Amplituden aufweisen.

8. Verfahren zur digitalen Übertragung von Fernsehbildern nach einem der vorhergehenden Ansprüche, dadurch gekennzeichnet, dass mehrdimensionale Teilbilder transformiert und übertragen werden.

9. Verfahren zur digitalen Übertragung von Fernsehbildern nach einem der vorhergehenden Ansprüche, dadurch gekennzeichnet, dass als Transformation die diskrete Fourier-Transformation verwendet wird.

**Claims**

1. A method for the digital transmission of television pictures, wherein the signal values of each television sub-frame ($X11$) are transformed into spectral values ($Y11$), the coefficients of which are transmitted and from which the signal values of the television sub-frame ($X11$) are redetermined at the receiving end, characterised in that first at uniform intervals of $n_D$ signal values column sub-frames ($X1_P$, $X2_P$) are transmitted, that then $n_2$ complementary signal values ($X1_2$) in each case located between adjacent column sub-frames ($X1_P$, $X2_P$), and adjacent $n_1$ overlapping signal values ($X_{P1}$, $X_{P2}$), which have already been transmitted as part of the column sub-frames ($X1_P$, $X2_P$) which adjoin the complementary signal values ($X1_2$), are combined to form a bridge sub-frame ($X1_B = X_{P1}$, $X1_2$, $X_{P2}$), and that the $n_B = n_1 + n_2$ signal values ($X_{P1}$, $X_{P2}$, $X12$) of a bridge sub-frame ($X1_B$) are commonly transformed (Fig. 1, Fig. 5).

2. A method for the digital transmission of television pictures as claimed in claim 1, characterised in that by means of a further transformation ($T_P$) the column sub-frames ($X_P$) are converted into spectral values ($Y_P$) and are transmitted.

3. A method for the digital transmission of television pictures as claimed in claim 1 or claim 2, characterised in that of $n_B = n_1 + n_2$ spectral values ($Y_B$) of a transformed bridge sub-frame ($X_B$), only $n_2$ spectral values ($Y_2$) are transmitted and

that at the receiving end the newly transmitted, complementary signal values ($X_2$) are determined by retransforming the transmitted spectral values ($Y_2$), using the already existing, overlapping signal values ($X_{P1}$, $X_{P2}$) of the adjacent column sub-frames ($X1_P$, $X2_P$).

4. A method for the digital transmission of television pictures as claimed in claim 1 or claim 2, characterised in that first all the column sub-frames ($X_P$) of a television half-frame or a full frame are transmitted and that then the intermediately stored bridge sub-frames ($X_B$) are transmitted.

5. A method for the digital transmission of television pictures as claimed in one of the claims 1 to 3, characterised in that first the next column sub-frame ($X2_2$) and then the preceding, intermediately stored bridge sub-frame ($X1_B$) are transmitted.

6. A method for the digital transmission of television pictures as claimed in one of the preceding claims, characterised in that a quantisation of the spectral values ($Y_2$), which are to be transmitted, is carried out.

7. A method for the digital transmission of television pictures as claimed in one of the preceding claims, characterised in that those spectral values ($Y_2$) whose coefficients have low amplituds are transmitted.

8. A method for the digital transmission of television pictures as claimed in one of the preceding claims, characterised in that multi-dimensional sub-frame are transformed and transmitted.

9. A method for the digital transmission of television pictures as claimed in one of the preceding claims, characterised in that the discrete Fourier transformation method is used.

**Revendications**

1. Procédé pour la transmission numérique d'images de télévision selon lequel les valeurs de signaux d'une image de télévision ($X11$) sont respectivement transformées en valeurs spectrales ($Y11$) dont les coefficients sont témis et à partir desquelles on détemine, côté réception, les valeurs de signaux de l'image partielle de télévision ($X11$), caractérisé en ce que tout d'abord des valeurs de signaux d'images partielles de base ($X1_P$, $X2_P$) sont transmises à des intervalles réguliers de $n_D$, qu'ensuite on assemble chaque fois en une image partielle de travée ($X1_B = X_{P1}$, $X1_2$, $X_{P2}$) $n_2$ valeurs de signaux complémentaires ($X1_2$) qui se situent entre des images partielles de base ($X1_P$, $X2_P$) et $n_1$ valeurs de signaux de chevauchement ($X_{P1}$, $X_{P2}$), voisines des signaux complémentaires ($X1_2$), et qui ont déjà été transmises en tant que partie d'images partielles de base ($X1_P$, $X2_P$), qui

sont voisines des valeurs de signaux complémentaires ($X1_2$), et que les $n_B = n_1 + n_2$ valeurs de signaux ($X_{P1}$, $X_{P2}$, $X1_2$) d'une image partielle de travée ($X1_B$) sont transformées toutes ensemble (figure 1, figure 5).

2. Procédé pour la transmission numérique d'images de télévision selon la revendication 1, caractérisé en ce que les images partielles de base ($X_P$) sont converties au moyen d'une nouvelle transformation ($T_P$) sous forme de valeurs spectrales ($Y_P$) qui sont ensuite transmises.

3. Procédé pour la transmission numérique d'images de télévision selon l'une des revendications 1 ou 2, caractérisé en ce que sont émises seules $n_2$ valeur spectrales de $n_B = n_1 + n_2$ valeurs spectrales d'une image partielle de travée transformée, et que côté réception, la recherche des valeurs de signaux complémentaires ($X_2$) nouvellement transmises s'effectue au moyen d'une transformation inverse des valeurs spectrales ($Y_2$) émises, en utilisant les valeurs de signaux de chevauchement précédentes ($X_{P1}$, $X_{P2}$) des images partielles de base voisines ($X1_P$, $X2_P$).

4. Procédé pour la transmission numérique d'images de télévision selon l'une des revendications 1 ou 2, caractérisé en ce que, tout d'abord sont transmises toutes les images partielles de base ($X_P$) d'une moitié d'image de télévision ou d'une image entière, et qu'ensuite sont transmises les images partielles de travée, mémorisées temporairement ($X_B$).

5. Procédé pour la transmission numérique d'images de télévision selon l'une des revendications 1 à 3, caractérisé en ce que chaque fois l'image partielle de base suivante ($X2_2$) est transmise et qu'ensuite, l'image partielle de travée la précédant ($X1_B$), et mémorisée temporairement est à son tour transmise.

6. Procédé pour la transmission numérique d'images de télévision selon l'une des revendications précédentes, caractérisé en ce que l'on procède à une quantification des valeurs spectrales ($Y_2$) à transmettre.

7. Procédé pour la transmission numérique d'images de télévision selon l'une des revendications précédentes, caractérisé en ce que sont transmises, celles des valeurs spectrales ($Y_2$) dont les coefficients présentent une faible amplitude.

8. Procédé pour la transmission numérique d'images de télévision selon l'une des revendications précédentes, caractérisé en ce que des images partielles pluridimensionnelles sont transformées et transmises.

9. Procédé pour la transmission numérique d'images de télévision selon l'une des revendications précédentes, caractérisé en ce qu'on se sert pour les transformations, de la transformation de Fourier discrète.

# FIG.1

# FIG.2

# FIG.3

# FIG.4

X11  T

X12  T

X13  T

Y11   Y12   Y13

# FIG.5

FIG. 6

FIG. 7

FIG. 8

FIG. 9